# EUROPEAN PATENT SPECIFICATION

(11) **EP 3 285 577 B1**
(45) Date of publication and mention of the grant of the patent: **07.06.2023**
(21) Application number: 16729051.9
(22) Date of filing: 22.04.2016
(51) Int. Cl.: A01N 25/00, A01N 59/16, D01B 7/00

(54) **METHOD FOR TREATMENT OF MULBERRY LEAVES AND FOR ANTI-BACTERIAL SILK PRODUCTION**
VERFAHREN ZUR BEHANDLUNG VON MAULBEERBLÄTTERN UND FÜR ANTIBAKTERIELLE HERSTELLUNG VON SEIDE
PROCÉDÉ DE TRAITEMENT DE FEUILLES DE MÛRIER ET DE PRODUCTION DE SOIE ANTIBACTÉRIENNE

(30) Priority: 24.04.2015 IT BA20150032
(43) Date of publication of application: 28.02.2018
(73) Proprietor: Caresilk s.r.l.s, 73100 Lecce (IT)
(72) Inventor: Pollini, Mauro, 73010 Giorgilorio-Surbo (LE) (IT); Palladini, Federica, 73010 Girogilorio -Surbo (LE) (IT)
(74) Representative: De Gregori, Antonella
(86) International application number: PCT/IB2016/052296
(87) International publication number: WO 2016/170507

(56) References cited:
- WO-A2-2007/074484
- KR-A- 20090 105 379
- KR-B1- 100 835 207
- PONRAJ GANESH PRABU ET AL: "Studies on the Growth Rate of Silkworm Bombyx mori (L.) (Lepidoptera: Bombycidae) Fed with Control and Silver Nanoparticles (AgNps) Treated MR 2 Mulberry Leaves", INTERNATIONAL JOURNAL OF INDUSTRIAL ENTOMOLOGY, vol. 22, no. 2, 30 June 2011 (2011-06-30), pages 39-44, XP055203422, ISSN: 1598-3579, DOI: 10.7852/ijie.2011.22.2.39
- S. DE SIMONE ET AL: "Development of silver nano-coatings on silk sutures as a novel approach against surgical infections", JOURNAL OF MATERIALS SCIENCE: MATERIALS IN MEDICINE, vol. 25, no. 9, 6 July 2014 (2014-07-06), pages 2205-2214, XP055297717, United States ISSN: 0957-4530, DOI: 10.1007/s10856-014-5262-9
- PALADINI F ET AL: "Efficacy of silver treated catheters for haemodialysis in preventing bacterial adhesion", JOURNAL OF MATERIALS SCIENCE: MATERIALS IN MEDICINE, KLUWER ACADEMIC PUBLISHERS, BO, vol. 23, no. 8, 15 May 2012 (2012-05-15), pages 1983-1990, XP035087812, ISSN: 1573-4838, DOI: 10.1007/S10856-012-4674-7
- J. G Dingle ET AL: "Silk production in Australia: A report for the Rural Industries Research and Development Corporation", , 1 January 2005 (2005-01-01), XP055203602, Retrieved from the Internet: URL:http://espace.library.uq.edu.au/view/U Q:205056 [retrieved on 2015-07-20]
- DATABASE BIOSIS [Online] BIOSCIENCES INFORMATION SERVICE, PHILADELPHIA, PA, US; 1982, KHLISTOVSKII E D ET AL: "EFFECT OF THE METHOD OF DRYING MULBERRY LEAVES ON THE GROWTH AND DEVELOPMENT OF SILKWORM BOMBYX-MORI LEPIDOPTERA BOMBYCIDAE CATERPILLARS REARED ON ARTIFICIAL NUTRIENT MEDIA", XP002742532, Database accession no. PREV198477002063 & ENTOMOLOGICHESKOE OBOZRENIE, vol. 61, no. 4, 1982, pages 759-763, ISSN: 0367-1445
- DATABASE BIOSIS [Online] BIOSCIENCES INFORMATION SERVICE, PHILADELPHIA, PA, US; 1991, LIAW G-J ET AL: "COMPARISON OF TWO EQUIPMENTS FOR DRYING MULBERRY LEAVES FOR ARTIFICIAL SILKWORM BOMBYX-MORI L. DIET", XP002742533, Database accession no. PREV199293063535 & ZHONGHUA KUNCHONG, vol. 11, no. 2, 1991, pages 170-173, ISSN: 0258-462X
- DATABASE BIOSIS [Online] BIOSCIENCES INFORMATION SERVICE, PHILADELPHIA, PA, US; 1996, BOSE P C ET AL: "Effect of foliar application of micronutrients to Mulberry on the quality of bivoltine cocoon and silk", XP002742534, Database accession no. PREV199799598967 & INDIAN JOURNAL OF SERICULTURE, vol. 35, no. 2, 1996, pages 111-113, ISSN: 0445-7722

## Description

### Technical field and background art

The silkworm, "Bombyx mori" has been the main source of silk for over 400 years. Its cocoon is made up of silk fibres made of fibroin, protein with microcrystalline structure, and sericin, amorphous protein with cohesive function (Ude AU et al., 2014, Materials and Design 57:298-305). In particular, the applications of silk in biomedical field, such for example tissue engineering, development of implantable devices and drug delivery, have been constantly increasing [Rockwood DN et al. 2013; Nat Protoc 6(10)]. At the state of the art the regeneration properties of fibroin, its good mechanic resistance, elasticity, biocompatibility and biodegradability are known (Kundu B et al. 2013; Adv Drug Deliv Rev 65:457-470). Such properties make fibroin a particularly interesting polymer for realization of suture thread and devices for treating skin lesions. In fact silk fibroin matrices can favour adhesion, growth and differentiating of cells such as fibroblasts and keratinocytes, thus promoting the healing process of lesions. In the field of treatment of lesions, the frequent risk of bacterial contamination represents one of the main causes of healing failure of lesions, further worsened by the increasing resistance shown by many microorganisms towards conventional antibiotics. Among the most interesting alternative antimicrobial agents, silver is a promising material of natural origin with demonstrated antibacterial, antifungal and antiviral efficacy. Silver can be used alone or in synergistic action with other metals with antibacterial properties, such for example zinc. For such reason, so far many technologies have been provided aiming at the introduction of silver in form of metal nanoparticles or salts and compounded in products of various nature.

Aim of the present invention is to provide a method for obtaining intrinsically antibacterial silk directly from the silkworm by introducing silver in its diet.

At the state of the art there are known some methods for realizing natural silk comprising silver nanoparticles, which use a modified diet for silkworms, as it is described for example in the Korean Patent KR100835207, wherein it is described a method in which a powder of silver nanoparticles is sprayed on mulberry leaves, on which silkworms are fed.

Other similar examples are described in the Application KR20090105379, KR20090110996 and in the document by Ponraj Ganesh Prabu et al "Studies on the Growth rate of silkworm bombyx mori fed with control and silver nanoparticles treated mulberry leaves" - International Journal of Industrial Entomology, vol. 22 n. 2. In the cited documents there is described the use of silver nanoparticles treated mulberry leaves for obtaining intrinsically antibacterial silk.

Anyway the methods described in the cited documents have some drawbacks, which are linked mainly to the fact that leaves are treated with solutions or suspensions containing silver nanoparticles. However, the use of such technique leads to very high costs linked to the use of metal silver nanoparticles. In fact it is inevitable that during the step of treatment a portion of the expensive solutions can be wasted and furthermore such process does not allow that an efficient adhesion of nanoparticles to the mulberry leaves is guaranteed. So, the poor adhesion limits actually the possibility to subject the leaves to other and needed working processes, as for example the chopping processes needed for feeding silkworms. In fact the process of cutting leaves would lead to a silver release and as a consequence a feedstuff for silkworm would be obtained containing an unknown quantity of silver.

### Aim of the invention

The methods for realizing intrinsically antibacterial silk known at the state of the art are limited. Unlike the techniques currently provided for production of antibacterial silk which are not economically advantageous and not particularly efficient from a technical point of view, the technology described in the present invention allows to contain the process costs, an accurate control of silver quantity deposited on leaves, a productive process with very low environmental impact in case of photo-reduction induced by the exposition to solar light and finally the deseasonalization of the production of cocoons by silkworms. In fact, according to the techniques known at the state of the art, it is known that the production of the cocoon occurs only in periods when new mulberry leaves are available.

The present invention provides a method for obtaining intrinsically antibacterial silk directly from the silkworm, by feeding the worm on mulberry leaves or silver treated feedstuff. Therefore aim of the present invention is to provide a new method for treatment of mulberry leaves to be used as it is or for the production of feedstuff in powder for silkworms, both enriched with silver nanoparticles. The method does not provide the use of silver colloidal solutions or suspensions but allows to synthetize silver nanoparticles directly on the same mulberry leaves (both picked and yet on the tree), thus strongly improving adhesion and stability of silver with respect to the methods known at the state of the art.

Furthermore, the present invention provides a method for treatment of feedstuff in powder for silkworms, which can be used for breeding deseasonalization.

Thanks to the development of silkworms feeding on chopped and with nutrient substances additivated leaves, it is possible to breed silkworms all the year long independently of the climatic and geographic conditions, and so to obtain antibacterial silk by treating such feedstuff with silver.

Yet, aim of the present invention is to provide a method for the production of silk containing silver nanoparticles, which is particularly cheep and efficient.

The present invention provides a method for the production of intrinsically antibacterial silk with low environmental impact, by exploiting the exposition to solar light for the photo-reduction step.

Yet, the present invention provides a method for the production of intrinsically antibacterial silk based on the treatment of mulberry leaves yet on the plant and/or tree by exploiting the exposition to solar light for the photo-reduction step.

### Fields of application

Silk obtained with the methods described in the present Patent can be used for the production of fabrics and textile goods in general with antibacterial properties (for examples ties, silk underwear etc.), for the biomedical field and in tissue engineering (new medications, suture threads etc.) and finally for the production of cosmetic products (for example creams containing fibroin and/or sericin additivated with silver).

### Brief description of the invention

The invention provides the prefixed aims since it is a method for treatment of mulberry leaves for feeding silkworms in order to obtain a feedstuff for silkworm, doped with at least a metal selected among silver and/or zinc, comprising the steps of:
a. preparing a solution comprising:
   - water;
   - a photo-reducer agent;
   - a precursor of said at least metal;
b. treating said mulberry leaves with said solution;
c. exposing said treated mulberry leaves to UV radiation, so that the photo-reduction of said precursor of said at least metal occurs, with the consequent deposition on said leaves of nanoparticles of said at least metal.

### DETAILED DESCRIPTION OF THE INVENTION

As preliminary remarks to the detailed description of the invention it is convenient to precise that the biologic cycle of the silkworm begins in the egg phase and it is articulated in about four weeks up to the production of the cocoon. The growth phases of the silkworm are called "larval instars" with "molts" occurring at intervals during which the exoskeleton of the worm grows; the cocoon is completed at the end of the 5°th larval instar. After about 12-15 days there occur the moth emerging, the coupling and the deposition of new eggs. During the development, the food requirements of the silkworm increase and the silkworm needs always more quantity of food.

It is convenient to note that in addition to the mulberry leaves, the silkworms can be fed also on artificial feedstuff in order to obviate the seasoning of the mulberry and to allow the sericulture also during the dormant season of the plant.

The feedstuff obtained from mulberry leaves dried and additivated with other nutrient substances such as flours of various kind, vitamins etc. in powder form can be treated with silver and/or zinc by using the same technologies proposed in the present invention for the treatment of new mulberry leaves. Each strategy can be evaluated according to the results expected in the silkworms by suitably managing the process variables.

For example it is possible to define the concentration of silver to be used for the treatment of leaves according to the antibacterial level desired in the silk yarn produced by the silkworm by increasing the concentration of the silver precursor to obtain silk yarns with more efficient antibacterial properties.

### Embodiments of the method with silver nanoparticles

The first step of the method provides the treatment of mulberry leaves (or feedstuff obtained therewith) with silver nanoparticles.

For realizing this step there can be used solutions containing various silver precursors. The method of deposition provides the step of impregnation by means of solutions of silver precursor by using the dip coating or spray coating techniques and the next exposition to ultraviolet light.

The next step of the process provides the silkworm feeding, and also in this case various methods can be used. Since the growth of the silkworm develops in five larval instars to each one of which a different quantity of food to be administered corresponds, it is possible to differentiate the silkworm feeding according to their growth phases. For example, it is possible to feed the silkworms on silver- and/or zinc-treated leaves or as an alternative on silver- and/or zinc-treated feedstuff since the first instar so that the silkworm gets used to the food administered since the first phases of life; on the other hand, it is possible to choose to feed the silkworms on silver and/or zinc treated food only during the 5°th instar after which the silkworm will begin the production of the cocoon; as an alternative it is possible to feed the silkworm on silver and/or zinc treated food between the 1°st and the 5°th instars. The choice to use treated food only during the 5°th instar is the most economically advantageous since it allows to limit the volume of food to be treated with silver and/or zinc to the needs of the silkworm in the last instar, thus leading anyway the risk of a lower intake of food by the worm due to the modification of its diet.

The silk yarn obtained from the silkworms subjected to the modified diet has the antibacterial properties and can be further worked thanks to the use of techniques commonly used in sericulture.

In the specific case of biomedical application, from such silk it is possible to extract fibroin and sericin for the production of devices with both antibacterial and regeneration properties.

In particular, such process of extraction of fibroin and sericin can be carried out by means of degumming, during which the cocoons are immersed in hot water with possible addition of chemical substances with the aim of separating the sericin, protein of the silk with adhesive function between the fibres. In the following, fibroin and sericin are processed by means of suitable working techniques in order to produce biomaterials with intrinsic regeneration and antibacterial properties.

The properties of silk fibres produced by the silkworm reflect both the process parameters adopted for silver and/or zinc treatment of leaves and/or feedstuff (first step of the method) and the feeding method of the silkworms (second step).

In particular, the feeding method (in terms of duration and choice of instars at which the silkworm have to be fed) and the percentage of silver and/or zinc to be used for the treatment of leaves and/or feedstuff influence the concentration of silver and/or zinc present in the cocoon.

### Embodiments of the method with nanoparticles of zinc or of zinc and silver

As yet said, yarns and fabrics treated with zinc or zinc and silver have efficient antibacterial properties as well.

Therefore it is possible to use methods similar to the ones which will be described for silver, to obtain feedstuff doped with zinc or zinc and silver. Therefore the method according to the present invention which uses zinc particles (alone or in association with silver particles) follows the same steps as yet described for the method which uses silver nanoparticles.

### Preferred embodiments

### Example n° 1 - Treatment of mulberry leaves by means of photo-chemical deposition of silver particles

According to a preferred embodiment, the treatment with silver of mulberry leaves and/or feedstuff is carried out by using a hydro-alcoholic solution of a silver precursor, preferably silver nitrate.

Leaves and/or feedstuff are impregnated with such solution, preferably using the spray coating technique, and in the following exposed to a UV lamp or as an alternative to solar light for inducing the photo-reduction reaction in order to convert the silver precursor in metal silver particles. Finally the treated leaves are washed and stored in refrigerator, preferably at a temperature of about 4°C. In case of new leaves only, these last ones can be stored in refrigerator for five days maximum up to their consumption. In case of leaves treated with silver directly on the tree, these maintain the antibacterial properties in the time and can be picked also after various weeks after treatment.

In the following the leaves and/or feedstuff treated with silver are used for feeding the silkworms and at the same time, as control, the silkworms are fed on not treated leaves or feedstuff. Both the families of silkworms are bred in the same conditions up to the time of "climbing to the wood", after which the silkworms produce the cocoon. The cocoon are picked and processed according to the traditional procedures dictated by the tradition of sericulture.

In the following there are described in detail some preferred embodiments to obtain intrinsically antibacterial silk thanks to the use of suitable techniques of treatment with silver and/or zinc of leaves and/or feedstuff:

### 1. Preparation of the solution containing the silver precursor

A hydro-alcoholic solution containing the silver precursor, preferably silver nitrate, is prepared with a concentration between 0.1 and 1%, preferably 0.5% AgNO₃. The solution contains also the photo-reducer agent, preferably an alcohol and preferably methyl alcohol CH₃OH, in quantity between 1 and 20%, preferably 10% CH₃OH. The use of water in the solution is provided as solvent.

The reagents are mixed at ambient temperature using a suitable mixing technique for obtaining the complete dissolving of salt, preferably by magnetic stirring for a time interval between 5 and 15 minutes, preferably 10 minutes.

The mixing step occurs in a non-transparent and suitably sealed vessel to avoid the interaction of the solution with solar light and the alcohol evaporation, respectively.

### 2. Deposition of the solution containing the silver precursor on mulberry leaves

Mulberry leaves are arranged on a working table avoiding that they overlap to each other and in the following they are treated with the silver based solution by using the a spray coating system, i.e. the spraying of the solution. The quantity of sprayed solution is between 25 and 100 g/m², and preferably 50 g/m².

### 3. Exposition to ultraviolet light of mulberry leaves

Such step can be carried out according to the two following methods:
a) immediately after the spray coating, the mulberry leaves are exposed to UV radiation, by using a lamp with an emission peak at wavelength between 350 and 400 nm, arranged at such a distance that the power emitted is between 5 and 100 W/m². Preferably the distance is equal to 20 cm, the time is between 1 and 30 minutes and preferably equal to 15 minutes, and the intensity of UV radiation is equal to 55 W/m².
b) As an alternative the photo-reduction reaction can occur thanks to the direct or indirect exposition of the treated mulberry leaves to solar light in a maximum time interval equal to at least 4 hours in case of direct light (preferably equal to 60 minutes) and 8 hours maximum in case of indirect light (preferably equal to 120 minutes).

### 4. Washing and storing

In the following the leaves treated with silver are washed in water to remove the not reacted silver precursor (if present), and in the following stored in refrigerator up to their use.

### Example n° 2 - Treatment of feedstuff obtained from mulberry leaves chopped and additivated by means of photo-chemical deposition of silver particles

The procedure of treatment provides to prepare a solution in the same way as in example n° 1, and to apply such solution on mulberry leaves in powder dried, chopped and additivated with nutrient substances (feedstuff).

In the following a layer of uniform thickness of feedstuff is arranged on a surface. Preferably the layer thickness is lower than 3 mm.

The next step consists in impregnating with the solution described in example n° 1 the powder of mulberry leaves dried by means of spray coating. Preferably a quantity of solution equal to about 50 g/m² is sprayed.

In the following there occurs the exposition to ultraviolet light (preferably with emission spectra peak between 350 and 400 nm) to obtain the photo-reduction of silver nitrate in metal nitrate after an exposition time between 1 and 30 minutes and which is preferably equal to 15 minutes. Preferably it can be used a UV lamp configured so that it produces a radiation intensity about 55 W/m².

As an alternative, the photo-reduction reaction can occur thanks to the direct or indirect exposition of the impregnated feedstuff to solar light in a maximum time interval equal to at least 4 hours in case of direct light (preferably equal to 60 minutes) and maximum 8 hours in case of indirect light (preferably equal to 120 minutes).

### Example n° 3 - Treatment by means of photo-chemical deposition of silver particles on mulberry leaves directly on the tree before picking

The procedure of treatment provides to prepare a solution in the same way as in example n° 1, and to spray by means of the spray coating technique a quantity between 25 and 100 g/m², and preferably equal to 50 g/m² of solution on leaves before picking them from the tree. The photo-reduction reaction will occur thanks to the direct or indirect exposition to the solar light in a maximum time interval equal to at least 4 hours in case of direct light (preferably equal to 60 minutes) and maximum 8 hours in case of indirect light (preferably equal to 120 minutes). The leaves will be then picked and subjected to the normal working cycles (washing, chopping etc.).

The advantages associated to these treatment modes are the following:
- the problem concerning the storing time of the treated leaves is eliminated; in this case the leaf treated with silver can be picked also after various weeks after the treatment;
- such mode of treatment directly on the plant or tree can be carried out only using the photo-reduction technique which allows to obtain a strong adhesion and stability in the time of silver to the leaf; a treatment with colloidal silver o other techniques widely reported in literature would not resist in the time especially if exposed to atmospheric agents (wind, rain etc.);
- lower overheating and/or partial deterioration of the leaf with respect to the technique providing the use of UV lamps;
- simplification of the process which does not provide the use of industrial systems for UV radiation of the leaves treated with the solution containing the silver precursor;
- lower environmental impact of the present technique.

### Example n° 4

### Treatment with mulberry leaves or feedstuff obtained from mulberry leaves by photo-chemical deposition of silver and colloidal zinc particles

The procedure of treatment aiming at promoting a synergistic action induced by the contemporaneous presence of silver and zinc provides to prepare a solution in the same way as in example n° 1 and to add a solution of colloidal zinc thereto.

The solution of colloidal zinc comprises nanoparticles between 10 and 100 nm, preferably 60 nm, and can be added in concentration between 25 and 100 ppm, preferably 70 ppm, in quantity between 1 and 30% with respect to the silver based solution, preferably 10%.

The following operations are the same as in example 1 and for brevity of exposition will be not reported.

### Example n° 5

### Treatment of mulberry leaves or feedstuff obtained from mulberry leaves by means of photo-chemical deposition of silver and micronized zinc particles

The procedure of treatment aiming at promoting a synergistic action induced by the contemporaneous presence of silver and zinc provides to prepare a solution in the same way as in example n° 1 and to add a solution of micronized zinc thereto.

The solution of micronized zinc comprises nanoparticles between 0.1 and 100 micron, and can be added in concentration between 25 and 100 ppm.

The following operations are the same as in example 1 and for brevity of exposition will be not reported.

## Claims

1. Method for treatment of mulberry leaves for feeding silkworms in order to obtain a feedstuff for silkworms, doped with at least one metal selected among silver and/or zinc, comprising the steps of:
a. preparing a solution comprising:
- water;
- a photo-reducer agent;
- a precursor of said at least one metal;
b. treating said mulberry leaves with said solution;
c. exposing said treated mulberry leaves to UV radiation, so that the photo-reduction of said precursor of said at least metal occurs, with the consequent deposition on said leaves of nanoparticles of said at least one metal.

2. Method according to claim 1, further comprising, prior to point b., the step of chopping said mulberry leaves and additivating them with nutrient substances in order to obtain a feedstuff for silkworms, and **characterized in that** said feedstuff, after carrying out steps b. and c., can be stored and used for deseasonalize breeding of silkworms.

3. Method according to claim 1 or 2, **characterized in that**
said at least one metal is silver,
said photo-reducer agent is an alcohol,
and said precursor is a silver salt.

4. Method according to claim 3, **characterized in that**
said alcohol is methyl alcohol, and its concentration in said solution is between 1 and 20% and **in that**
said silver salt is silver nitrate and its concentration in said solution is between 0.1 and 1.1%.

5. Method according to any one of the preceding claims, **characterized in that** said treatment at point b. is carried out by means of spray coating or by means of dip coating and **in that** the quantity of solution used for said treatment is between 25 and 100 g for square meter of mulberry leaves.

6. Method according to any one of the preceding claims, **characterized in that** said exposition to UV radiation at point c. occurs by means of exposition to solar light for a time interval between 4 and 8 hours.

7. Method according to any one of claims 1 to 5, **characterized in that** said exposition to UV radiation of point c. occurs by means of exposition to radiation produced by a lamp with emission peak between 350 and 400 nm, arranged at such a distance that the power is between 5 W/m² and 100 W/m² for a time interval between 1 and 30 minutes.

8. Method according to any one of claims 3 to 6, further comprising, after point c., the step of chopping said mulberry leaves treated with said at least metal to obtain a feedstuff intended for silkworm diet.

9. Method according to any one of claims 1 to 2, or 3 to 6 or according to claim 8 **characterized in that** said treatment occurs by spraying said solution on mulberry leaves yet on the tree before they are picked.

10. Method according to any one of the preceding claims, **characterized in that** said at least one metal comprises both zinc and silver.

11. Method for production of intrinsically antibacterial silk, doped with silver and/or zinc, comprising the steps of:
- feeding the silkworms up to when they start to produce the cocoon on said mulberry leaves treated with the method according to any one of the preceding claims;
- picking the cocoons produced by silkworms and processing them for obtaining zinc and/or silver doped silk.

## Patentansprüche

1. Verfahren zur Behandlung von Maulbeerblättern zur Fütterung von Seidenraupen, um ein Futtermittel für Seidenraupen zu erhalten, das mit mindestens einem Metall dotiert ist, das aus Silber und/oder Zink ausgewählt ist, umfassend die Schritte:
a. Vorbereiten einer Lösung, umfassend:
- Wasser;
- ein Photo-Reduktionsmittel;
- einen Vorläufer des mindestens einen Metalls;
b. Behandeln der Maulbeerblätter mit der Lösung;
c. Belichten der behandelten Maulbeerblätter mit UV-Strahlung, so dass die Photoreduktion des Vorläufers des mindestens einen Metalls stattfindet, mit der daraus folgenden Ablagerung von Nanopartikeln des mindestens einen Metalls auf den Blättern.

2. Verfahren nach Anspruch 1, ferner umfassend, vor Punkt b., den Schritt zum Hacken der Maulbeerblätter und deren Additivierung mit Nährsubstanzen, um ein Futtermittel für Seidenraupen zu erhalten, und **dadurch gekennzeichnet, dass** das Futtermittel nach Durchführung der Schritte b. und c. gelagert und verwendet werden kann, um die Seidenraupen bei der Zucht saisonunabhängig zu machen.

3. Verfahren nach Anspruch 1 oder 2, **dadurch gekennzeichnet, dass**
das mindestens eine Metall Silber ist,
das Photo-Reduktionsmittel ein Alkohol ist,
und der Vorläufer ein Silbersalz ist.

4. Verfahren nach Anspruch 3, **dadurch gekennzeichnet, dass** der Alkohol Methylalkohol ist und seine Konzentration in der Lösung zwischen 1 und 20 % liegt und dadurch, dass
das Silbersalz Silbernitrat ist und seine Konzentration in der Lösung zwischen 0,1 und 1,1 % liegt.

5. Verfahren nach einem der vorhergehenden Ansprüche, **dadurch gekennzeichnet, dass** die Behandlung am Punkt b. mittels Sprühbeschichtung oder mittels Tauchbeschichtung durchgeführt wird und dadurch, dass die Menge der Lösung, die für die Behandlung verwendet wird, zwischen 25 und 100 g für Quadratmeter Maulbeerblätter liegt.

6. Verfahren nach einem der vorhergehenden Ansprüche, **dadurch gekennzeichnet, dass** die Belichtung mit UV-Strahlung am Punkt c. durch Belichtung mit Sonnenlicht für ein Zeitintervall zwischen 4 und 8 Stunden erfolgt.

7. Verfahren nach einem der Ansprüche 1 bis 5, **dadurch gekennzeichnet, dass** die Belichtung mit UV-Strahlung des Punktes c. durch Strahlenbelastung erfolgt, die von einer Lampe mit einem Emissionspeak zwischen 350 und 400 nm erzeugt wird, die in einem solchen Abstand angeordnet ist, dass die Leistung zwischen 5 W/m² und 100 W/m² für ein Zeitintervall zwischen 1 und 30 Minuten liegt.

8. Verfahren nach einem der Ansprüche 3 bis 6, das zudem nach Punkt c. den Schritt zum Hacken der Maulbeerblätter umfasst, die mit dem mindestens einen Metall behandelt wurden, um ein Futtermittel zu erhalten, das für die Seidenraupen-Diät bestimmt ist.

9. Verfahren nach einem der Ansprüche 1 bis 2, 3 bis 6 oder nach Anspruch 8, **dadurch gekennzeichnet, dass** die Behandlung durch Aufsprühen der Lösung auf die Maulbeerblätter erfolgt, bevor sie gepflückt werden.

10. Verfahren nach einem der vorhergehenden Ansprüche, **dadurch gekennzeichnet, dass** das mindestens eine Metall sowohl Zink als auch Silber umfasst.

11. Verfahren zur Herstellung von an sich antibakterieller Seide, die mit Silber und/oder Zink dotiert ist, umfassend die Schritte:
- Füttern der Seidenraupen bis zu dem Zeitpunkt, an dem sie beginnen, den Kokon auf den Maulbeerblättern zu produzieren, die mit dem Verfahren nach einem der vorhergehenden Ansprüche behandelt werden;
- Pflücken der von Seidenraupen produzierten Kokons und deren Verarbeiten, um mit Zink und/oder Silber dotierte Seide zu erhalten.

## Revendications

1. Procédé pour le traitement de feuilles de mûrier pour l'alimentation de vers à soie afin d'obtenir un aliment pour vers à soie, dopé avec au moins un métal sélectionné parmi l'argent et/ou le zinc, comprenant les étapes de :
a. la préparation d'une solution comprenant :
- de l'eau ;
- un agent photo-réducteur ;
- un précurseur dudit au moins un métal ;
b. le traitement desdites feuilles de mûrier avec ladite solution ;
c. l'exposition desdites feuilles de mûrier traitées à un rayonnement ultraviolet, UV, de sorte que la photo-réduction dudit précurseur dudit au moins un métal soit effectuée, avec le dépôt consécutif sur lesdites feuilles de nanoparticules dudit au moins un métal.

2. Procédé selon la revendication 1, comprenant en outre, avant le point b., l'étape de hachage desdites feuilles de mûrier et d'ajout à celles-ci de substances nutritives afin d'obtenir un aliment pour vers à soie, et **caractérisé en ce que** ledit aliment, après la réalisation des étapes b. et c., peut être stocké et utilisé pour l'élevage désaisonnalisé de vers à soie.

3. Procédé selon la revendication 1 ou 2, **caractérisé en ce que**
ledit au moins un métal est l'argent,
ledit agent photo-réducteur est un alcool,
et ledit précurseur est un sel d'argent.

4. Procédé selon la revendication 3, **caractérisé en ce que**
ledit alcool est l'alcool méthylique, et sa concentration dans ladite solution est entre 1 et 20 %, et **en ce que**
ledit sel d'argent est le nitrate d'argent et sa concentration dans ladite solution est entre 0,1 et 1,1 %.

5. Procédé selon l'une quelconque des revendications précédentes, **caractérisé en ce que** ledit traitement au point b. est réalisé au moyen d'un revêtement par pulvérisation ou au moyen d'un revêtement par immersion et **en ce que** la quantité de solution utilisée pour ledit traitement est entre 25 et 100 g par mètre carré de feuilles de mûrier.

6. Procédé selon l'une quelconque des revendications précédentes, **caractérisé en ce que** ladite exposition au rayonnement UV au point c. est effectuée au moyen d'une exposition à la lumière solaire pendant un intervalle temporel d'entre 4 et 8 heures.

7. Procédé selon l'une quelconque des revendications 1 à 5, **caractérisé en ce que** ladite exposition au rayonnement UV du point c. est effectuée au moyen d'une exposition à un rayonnement produit par une lampe ayant un pic d'émission entre 350 et 400 nm, agencée à une distance telle que la puissance est entre 5 W/m² et 100 W/m² pendant un intervalle temporel d'entre 1 et 30 minutes.

8. Procédé selon l'une quelconque des revendications 3 à 6, comprenant en outre, après le point c., l'étape de hachage desdites feuilles de mûrier traitées avec ledit au moins métal pour obtenir un aliment destiné au régime alimentaire de vers à soie.

9. Procédé selon l'une quelconque des revendications 1 à 2, ou 3 à 6 ou selon la revendication 8 **caractérisé en ce que** ledit traitement est effectué par la pulvérisation de ladite solution sur des feuilles de mûrier encore sur l'arbre avant qu'elles soient récoltées.

10. Procédé selon l'une quelconque des revendications précédentes, **caractérisé en ce que** ledit au moins un métal comprend à la fois le zinc et l'argent.

11. Procédé pour la production de soie intrinsèquement antibactérienne, dopée avec de l'argent et/ou du zinc, comprenant les étapes de :
- l'alimentation des vers à soie jusqu'au moment auquel ils commencent à produire le cocon sur lesdites feuilles de mûrier traitées avec le procédé selon l'une quelconque des revendications précédentes ;
- la récolte des cocons produits par les vers à soie et le traitement de ceux-ci pour l'obtention de soie dopée au zinc et/ou à l'argent.
